# EUROPÄISCHE PATENTSCHRIFT

(11) **EP 2 513 874 B1**
(45) Veröffentlichungstag und Bekanntmachung des Hinweises auf die Patenterteilung: **29.03.2017**
(21) Anmeldenummer: 10793170.1
(22) Anmeldetag: 16.12.2010
(51) Int. Cl.: G07D 7/12, H04N 1/028

(54) **SENSOR ZUR PRÜFUNG VON WERTDOKUMENTEN**
SENSOR FOR INSPECTING VALUE DOCUMENTS
DÉTECTEUR POUR VÉRIFIER DES DOCUMENTS DE VALEUR

(30) Priorität: 18.12.2009 DE 102009058807
(43) Veröffentlichungstag der Anmeldung: 24.10.2012
(73) Patentinhaber: Giesecke & Devrient GmbH, 81677 München (DE)
(72) Erfinder: FRANKENBERGER, Jörg, 85570 Markt Schwaben (DE); DECKENBACH, Wolfgang, 83135 Schechen (DE)
(86) Internationale Anmeldenummer: PCT/EP2010/007705
(87) Internationale Veröffentlichungsnummer: WO 2011/072864

(56) Entgegenhaltungen:
- WO-A1-97/31340
- WO-A1-2005/109352
- DE-A1- 10 239 225
- DE-A1-102005 029 119
- DE-B3-102007 031 230
- DE-U1-202007 013 090
- JP-A- 2005 276 849
- JP-A- 2006 058 488

## Beschreibung

Die Erfindung betrifft einen Sensor zur Prüfung von Wertdokumenten und eine Vorrichtung zur Prüfung von Wertdokumenten, die den Sensor enthält. Zur Prüfung von Wertdokumenten werden üblicherweise Sensoren verwendet, mit denen die Art der Wertdokumente bestimmt wird und/ oder mit denen die Wertdokumente auf Echtheit und/ oder auf ihren Zustand geprüft werden. Derartige Sensoren werden zur Prüfung von Wertdokumenten wie z.B. Banknoten, Schecks, Ausweisen, Kreditkarten, Scheckkarten, Tickets, Gutscheinen und dergleichen verwendet. Die Prüfung der Wertdokumente erfolgt in einer Vorrichtung zur Wertdokumentbearbeitung, in der, je nach den zu prüfenden Wertdokumenteigenschaften, einer oder mehrere unterschiedliche Sensoren enthalten sind. Üblicherweise werden die Wertdokumente bei der Prüfung in einer oder mehreren Spuren abgetastet, wobei der Sensor und das Wertdokument relativ zueinander bewegt werden.

DE10239225 offenbart einen solchen Sensor.

Die Wertdokumente werden häufig mit Hilfe optischer Sensoren geprüft, die das von den Wertdokumenten ausgehende Licht erfassen. Zur Beleuchtung eines Wertdokuments werden verschiedenfarbige Lichtquellen verwendet. Üblicherweise wird das von den Lichtquellen emittierte Licht direkt oder mit Hilfe von Linsen auf das zu prüfende Wertdokument gerichtet. Dabei besteht jedoch das Problem, dass mehrere verschiedene Lichtquellen, die sich an unterschiedlichen Positionen befinden, denselben Bereich auf dem Wertdokument beleuchten sollen. Mit Hilfe von Strahlteilern ließe sich zwar ein gemeinsamer Strahlengang für das Emissionslicht der Lichtquellen erreichen, durch die Teildurchlässigkeit der Strahlteiler bleibt jedoch ein großer Anteil des Emissionslichts ungenutzt.

Es ist auch bekannt, zur Beleuchtung des Wertdokuments mehrere verschiedenfarbige Lichtquellen zu verwenden, deren Licht über einen gemeinsamen Lichtleiter auf das Wertdokument gerichtet wird. Aufgrund der Relativbewegung zwischen dem Sensor und dem daran vorbei transportierten Wertdokument ist jedoch ein Mindestabstand zwischen dem Lichtleiter und dem Sensor erforderlich. Da das Licht nach dem Austreten aus dem Lichtleiter divergiert, führt dieser Mindestabstand dazu, dass der beleuchtete Bereich auf dem Wertdokument relativ groß und die Beleuchtungsintensität entsprechend gering ist. Eine derartige Beleuchtung ist daher ungünstig, wenn die optischen Eigenschaften eines Wertdokuments in einem räumlich begrenzten Bereich erfasst werden sollen.

Eine Aufgabe der vorliegenden Erfindung ist es daher, einen Sensor zur Prüfung von Wertdokumenten bereit zu stellen, der weitgehend denselben räumlich begrenzten Bereich des Wertdokuments mit dem Emissionslicht verschiedener Lichtquellen beleuchten kann.

Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Der Sensor weist eine Beleuchtungseinrichtung zum Beleuchten des durch den Sensor zu prüfenden Wertdokuments, eine Abbildungsoptik und eine Detektionseinrichtung auf. Zu Prüfung eines Wertdokuments wird das Wertdokument in eine Messebene gebracht, insbesondere in einen in der Messebene gelegenen Erfassungsbereich des Sensors. Die Beleuchtungseinrichtung des Sensors weist eine Vielzahl verschiedener Lichtquellen auf, die nebeneinander angeordnet sind und deren Emissionsspektren voneinander verschieden sind. Durch die Abbildungsoptik wird das von der Beleuchtungseinrichtung ausgesendete Licht auf einen Bereich der Messebene abgebildet, der durch das Licht der Beleuchtungseinrichtung beleuchtet wird. Die Detektionseinrichtung ist zum Detektieren von Licht ausgebildet, das, beim Betreiben des Sensors, wenn das Wertdokument durch die Beleuchtungseinrichtung beleuchtet wird, von dem beleuchteten Bereich ausgeht.

Die Lichtquellen können z.B. in einem eindimensionalen oder zweidimensionalen Raster angeordnet sein. Das von den Lichtquellen emittierte Licht wird durch ein Mikrolinsenarray gesammelt, das ein Bestandteil der Beleuchtungseinrichtung ist und das zwischen den Lichtquellen und der Abbildungsoptik angeordnet ist. Das Mikrolinsenarray der Beleuchtungseinrichtung enthält eine Vielzahl von Mikrolinsen, die das gesammelte Licht auf die Abbildungsoptik richten. Das Mikrolinsenarray und die Lichtquellen sind derart zueinander angeordnet, dass jeder der Lichtquellen genau eine der Mikrolinsen zugeordnet ist. Beim Betreiben des Sensors wird so das Emissionslicht jeder der Lichtquellen durch genau eine Mikrolinse des Mikrolinsenarrays gesammelt. Jede dieser Mikrolinsen sammelt dabei nur das Emissionslicht genau einer der Lichtquellen. Durch die der jeweiligen Lichtquelle zugeordnete Mikrolinse wird das Emissionslicht jeder der Lichtquellen mit hoher Effizienz gesammelt.

Die Abbildungsoptik ist auf der dem Wertdokument zugewandten Seite des Mikrolinsenarrays angeordnet. Die Abbildungsoptik ist dazu ausgebildet, das Emissionslicht jeder der Lichtquellen, nach Durchtritt durch die jeweilige Mikrolinse, zu sammeln und auf ein durch den Sensor zu prüfendes Wertdokument abzubilden. Das von der Beleuchtungseinrichtung ausgesendete Licht wird durch die Abbildungsoptik über einen definierten Strahlengang auf den beleuchteten Bereich der Messebene bzw. des Wertdokuments abgebildet. Die Abbildungsoptik weist bevorzugt eines oder mehrere refraktive optische Elemente und/ oder diffraktive und/ oder spiegelnde optische Elemente auf, die das von den Lichtquellen emittierte Licht auf das Wertdokument abbilden. Vorzugsweise wird die Abbildungsoptik durch eine oder mehrere Abbildungslinsen gebildet. Dadurch dass eine Abbildung des Beleuchtungslichts auf das Wertdokument erfolgt, ist der beleuchtete Bereich des Wertdokuments klar definiert und räumlich begrenzt. Dies stellt einen Vorteil gegenüber einer direkten Beleuchtung des Wertdokuments durch die Lichtquellen (ohne dazwischen liegende Optik) dar und gegenüber einer einfachen Lichtleiteroptik (ohne Abbildungsoptik), durch die das Licht nicht abgebildet wird, sondern ohne definierten Strahlengang vom Lichtleiter auf das Wertdokument gebracht wird.

Die Lichtquellen, das Mikrolinsenarray und die Abbildungsoptik sind so zueinander angeordnet, dass das Emissionslicht jeder der Lichtquellen durch das Mikrolinsenarray und die Abbildungsoptik auf die Messebene abgebildet werden kann bzw. auf ein Wertdokument abgebildet werden kann, das in der Messebene vorhanden ist, um durch den Sensor geprüft zu werden. Jede der Lichtquellen wird durch die ihr zugeordnete Mikrolinse und die Abbildungsoptik vorzugsweise so abgebildet wird, dass der durch die Lichtquelle beleuchtete Bereich der Messebene im Vergleich zur Lichtquelle vergrößert ist. Die Mikrolinsen des Mikrolinsenarrays und die Abbildungsoptik sind bevorzugt derart angeordnet und ausgebildet, dass die Lichtquellen, unscharf auf den beleuchteten Bereich der Messebene abgebildet werden. Dadurch lässt sich erreichen, dass auch solche Lichtquellen, über deren Lichtaustrittsfläche das Emissionslicht sehr inhomogen emittiert wird, zumindest einen Abschnitt des beleuchteten Bereichs homogen ausleuchten.

Die Messebene liegt derart nah am Brennpunkt der Abbildungsoptik, dass das von der Beleuchtungseinrichtung ausgesendete Licht der verschiedenen Lichtquellen weitgehend auf denselben beleuchteten Bereich der Messebene abgebildet wird. Dadurch kann erreicht werden, dass trotz der Beleuchtung des Wertdokuments mit verschiedenen, nebeneinander angeordneten Lichtquellen, stets im Wesentlichen derselbe Bereich des zu prüfenden Wertdokuments beleuchtet und durch die Detektionseinrichtung detektiert werden kann.

Beispielsweise sind die verschiedenen Lichtquellen der Beleuchtungseinrichtung auf einer den Lichtquellen gemeinsamen Lichtquellen-Aufnahme nebeneinander angeordnet. Die Lichtquellen-Aufnahme weist z.B. eine Vielzahl von Lichtquellen-Positionen auf, die jeweils zur Aufnahme einer chipförmigen Lichtquelle ausgebildet sind, insbesondere zur Aufnahme einer lichtemittierenden Diode. Die Lichtquellen sind auf der Lichtquellenaufnahme so angeordnet, dass ihre Anordnung der Anordnung der Mikrolinsen innerhalb des Mikrolinsenarrays entspricht. Das Mikrolinsenarray enthält vorzugsweise Befestigungsmittel, die zum Befestigen des Mikrolinsearrays an der Lichtquellen-Aufnahme ausgebildet sind. Die Lichtquellen-Aufnahme weist ein zu den Befestigungsmitteln des Mikrolinsenarrays passendes Gegenstück auf.

Bevorzugt sind die Lichtquellen und das Mikrolinsenarray so zueinander angeordnet, dass jede Lichtquelle der Beleuchtungseinrichtung von der ihr zugeordneten Mikrolinse weniger als die Brennweite dieser Mikrolinse entfernt ist. Dadurch dass der Abstand der Lichtquelle von der ihr zugeordneten Mikrolinse geringer ist als die Brennweite der Mikrolinse, kann ein besonders großer Anteil des von der Lichtquelle emittierten Lichts gesammelt werden. Alternativ kann der Abstand zwischen der Lichtquelle und der ihr zugeordneten Mikrolinse auch mehr als die einfache Brennweite betragen, dann aber vorzugsweise weniger als die doppelte Brennweite der Mikrolinse.

In einer bevorzugten Ausführungsform sind die Mikrolinsen des Mikrolinsenarrays als asphärische Mikrolinsen ausgebildet und/ oder die Abbildungsoptik weist zumindest eine asphärische Abbildungslinse auf. Insbesondere ist die asphärische Form der Abbildungslinse derart auf die asphärische Form der Mikrolinsen abgestimmt, dass ein Abschnitt innerhalb des beleuchteten Bereichs der Messebene durch das Emissionslicht jeder der verschiedenen Lichtquellen homogen beleuchtet wird. Zu diesem Zweck ist es bevorzugt, dass die Form der asphärischen Mikrolinsen und die Form der asphärischen Abbildungslinse qualitativ in gleicher Weise von einer sphärischen Linsenform der jeweiligen Linse abweichen. Das heißt, die Form der asphärischen Mikrolinsen und die Form der asphärischen Abbildungslinse weichen derart von einer sphärischen Form ab, dass alle diese asphärischen Linsen am Rand entweder stärker gekrümmt sind als in der Mitte der jeweiligen asphärischen Linse oder dass alle diese asphärischen Linsen am Rand weniger gekrümmt sind als in der Mitte der jeweiligen asphärischen Linse. Bezogen auf eine sphärische Form der jeweiligen Linse, bei der die Linse von ihrer Mitte bis zu ihrem Rand durchgehend die Form einer Kugelschale (also eine konstante Krümmung) aufweist, sind also die Oberflächen der asphärischen Mikrolinsen und die Oberflächen der asphärischen Abbildungslinse, am Rand der jeweiligen asphärischen Linse, entweder beide stärker gekrümmt oder beide weniger gekrümmt sind als in der Mitte der jeweiligen asphärischen Linse. In einer bevorzugten Variante weichen die Form der Mikrolinsen und/ oder die Form der Abbildungslinse so von einer sphärischen Linsenform ab, dass die Oberfläche der jeweiligen Linse an den Rändern weniger gekrümmt ist als in der Mitte der jeweiligen Linse.

Um das von der Beleuchtungseinrichtung ausgesendete Licht zu homogenisieren, kann zwischen dem Mikrolinsenarray und der Abbildungsoptik ein Streukörper angeordnet sein. Vorzugsweise ist der Streukörper als Streufolie ausgebildet, insbesondere als Streufolie, die eine definierte, lichtstreuende Struktur aufweist, um das von der Beleuchtungseinrichtung ausgesendete Licht gezielt über einen bestimmten Winkelbereich zu verteilen. Der Streukörper, insbesondere die Streufolie, kann zusätzlich zu den asphärischen Mikrolinsen und/oder zu der asphärischen Abbildungslinse zur Homogenisierung des von der Beleuchtungseinrichtung ausgesendeten Lichts eingesetzt werden. Der Streukörper, insbesondere die Streufolie, kann aber auch an Stelle der asphärischen Mikroinsen und/ oder der asphärischen Abbildungslinse zur Homogenisierung eingesetzt werden, d.h. in Verbindung mit sphärischen Mikrolinsen und/ oder mit einer sphärischen Abbildungslinse.

Die Beleuchtungseinrichtung weist eine Vielzahl von Lichtquellen mit einer Vielzahl verschiedener Emissionsspektren auf. Das heißt, die Vielzahl der Lichtquellen stellt eine Vielzahl verschiedener Emissionsspektren bereit, deren Intensitätsmaxima bei verschiedenen Wellenlängen liegen. Beispielsweise ist jede der Lichtquellen der Beleuchtungseinrichtung zur Emission einer Emissionslinie bei einer bestimmten Wellenlänge ausgebildet, deren spektrale Lage sich von den Emissionslinien aller anderen Lichtquellen der Beleuchtungseinrichtung unterscheidet. Alternativ kann die Beleuchtungseinrichtung aber auch mehrere gleiche Lichtquellen aufweisen, zum Beispiel um auch in einem Spektralbereich mit lichtschwachen Lichtquellen eine ausreichende Beleuchtungsintensität zu erhalten. Insbesondere kann die Beleuchtungseinrichtung eine oder mehrere Lichtquellen aufweisen, deren Emissionsspektren im visuell sichtbaren Spektralbereich liegen und/ oder eine oder mehrere Lichtquellen, deren Emissionsspektren im infraroten Spektralbereich liegen und/ oder eine oder mehrere Lichtquellen, deren Emissionsspektren im ultravioletten Spektralbereich liegen. Als Lichtquellen werden bevorzugt lichtemittierende Dioden eingesetzt, beispielsweise Leuchtdioden (LED), insbesondere Halbleiter-Leuchtdioden oder organische Leuchtdioden (OLED), und/oder Laserdioden, insbesondere vertikal-cavity surface emitting laser (VCSEL).

Zur Prüfung des Wertdokuments werden die Lichtquellen nacheinander ein-und ausgeschaltet, um einen Bereich des Wertdokuments mit einer Beleuchtungssequenz aus Lichtpulsen mit verschiedenen Emissionsspektren zu beleuchten. Die Detektionseinrichtung ist zum Detektieren von Licht ausgebildet, das, beim Prüfen des Wertdokuments, von dem mit der Beleuchtungssequenz beleuchteten Bereich des Wertdokuments ausgeht. Für jeden der Lichtpulse der Beleuchtungssequenz wird dabei ein Messwert detektiert, um eine spektrale Intensitätsverteilung des detektierten Lichts aufzunehmen. Die detektierten Messwerte entsprechen jeweils der Lichtintensität, die bei der Beleuchtung mit einem der Lichtpulse der Beleuchtungssequenz detektiert wird. Die spektrale Intensitätsverteilung des detektierten Lichts wird aus den detektieren Messwerten abgeleitet.

Die Erfindung betrifft außerdem eine Vorrichtung zur Prüfung von Wertdokumenten, die einen oder mehrere der erfindungsgemäßen Sensoren enthält. Die Vorrichtung kann ein Transportsystem aufweisen, das dazu ausgebildet ist, Wertdokumente an dem Sensor vorbei zu transportieren, damit nacheinander mehrere Bereiche des Wertdokuments durch den Sensor detektiert werden können. In der Variante, bei der das Wertdokument zu seiner Prüfung mit einer Transportgeschwindigkeit an dem Sensor vorbeitransportiert wird, wird die Dauer der Beleuchtungssequenz vorzugsweise so auf die Transportgeschwindigkeit des Wertdokuments abgestimmt, dass alle Lichtpulse, die während der Beleuchtungssequenz von den Lichtquellen emittiert werden, trotz der Bewegung des Wertdokuments nahezu denselben Bereich des vorbei transportierten Wertdokuments beleuchten.

Der Sensor ist nicht zur vollflächigen Prüfung des Wertdokuments, sondern zur Prüfung des Wertdokuments in einer oder in mehreren Spuren auf dem Wertdokument ausgebildet. Im Fall der Prüfung in mehreren Spuren sind zwischen den Spuren jeweils Wertdokumentbereiche angeordnet, die durch den Sensor nicht geprüft werden. Die zur Prüfung des Wertdokuments beleuchteten Bereiche bilden Spuren, die parallel zueinander und entlang der Transportrichtung des Wertdokuments verlaufen. Die Spuren sind auf dem Wertdokument diskret verteilt. Für jede der Spuren ist zumindest eine Beleuchtungseinrichtung, eine Abbildungsoptik und eine Detektionseinrichtung gemäß der obigen Beschreibung vorgesehen. Die Beleuchtungssequenzen folgen vorzugweise so schnell aufeinander, dass das Wertdokument entlang jeder der Spuren quasi kontinuierlich geprüft wird. Alternativ kann zur Prüfung des Wertdokuments dieses aber auch statisch in der Messebene des Sensors positioniert werden.

Um eine eineindeutige Zuordnung zwischen den Mikrolinsen und den Lichtquellen zu erhalten, sind die Mikrolinsen in dem Mikrolinsenarray vorzugsweise in dem gleichen zweidimensionalen Raster angeordnet wie die Lichtquellen-Positionen auf der Lichtquellenaufnahme angeordnet sind. Insbesondere ist das Mikrolinsenarray als einstückiger Körper ausgebildet. Das Mikrolinsenarray weist vorzugsweise Befestigungsmittel auf, die integraler Bestandteil des Mikrolinsenarrays, insbesondere des einstückigen Körpers, sein können. Die Befestigungsmittel des Mikrolinsenarrays sind z.B. als Befestigungsstifte ausgebildet oder als Löcher zur Aufnahme von Befestigungsstiften, die auf der Lichtquellen-Aufnahme vorgesehen sind. Die Mikrolinsen sind z.B. als plankovexe Mikrolinsen ausgebildet, wobei die plane Seite der Mikrolinsen der Lichtquelle zugewandt ist, die der jeweiligen Mikrolinse zugeordnet ist. Vorzugsweise sind alle Mikrolinsen des Mikrolinsenarrays gleich ausgebildet, um eine größtmögliche Variabilität in der Anordnung der Lichtquellen auf der Lichtquellen-Aufnahme zu gewährleisten. Insbesondere weisen dazu alle Mikrolinsen die gleiche Form und/ oder die gleiche Brennweite auf. Insbesondere sind alle Mikrolinsen des Mikrolinsenarrays zueinander koplanar angeordnet. Alternativ können auch einige Mikrolinsen des Mikrolinsenarrays eine von den übrigen Mikrolinsen abweichende Form und/oder Brennweite aufweisen. Dadurch könnte z.B. eine individuelle Anpassung der Mikrolinsen an die optischen Eigenschaften der Lichtquellen erreicht werden, denen sie zugeordnet sind und zu deren Lichtsammlung sie vorgesehen sind.

Durch Verwendung des Mikrolinsenarrays ergeben sich große Vorteile im Vergleich zu einer Beleuchtungseinrichtung, bei der für jede Lichtquelle eine Einzellinse verwendet wird. Denn in diesem Fall müsste für jede der Einzellinsen eine individuelle Halterung vorgesehen werden und bei der Befestigung der Einzellinsen die genaue Positionierung relativ zu der jeweiligen Lichtquelle sicher gestellt werden. Dabei kann es erforderlich sein, dass die genaue Position und/ oder Orientierung der Einzellinsen nachträglich justiert werden muss. Demgegenüber reicht bei Verwendung eines Mikrolinsenarrays, das für jede Lichtquelle genau eine Mikrolinse aufweist, eine einzige genaue Positionierung aus. Diese Positionierung kann durch die Befestigungsmittel des Mikrolinsenarrays erfolgen, die mit den entsprechenden Gegenstücken der Lichtquellen-Aufnahme verbunden werden. Die Herstellung des Sensors kann daher viel einfacher und ohne Justage erfolgen. Im Gegensatz zur Realisierung einer entsprechenden Beleuchtung mit Einzellinsen, die einzeln gehaltert werden müssen und bei deren Anordnung immer Zwischenräume verbleiben, besteht bei dem Mikrolinsenarray außerdem zwischen den einzelnen Mikrolinsen kein oder nur ein minimaler Zwischenraum. Da das Mikrolinsenarray als einstückiger Körper ausgebildet ist, können die Mikrolinsen direkt ineinander übergehen. Durch das Mikrolinsenarray kann daher quasi eine flächendeckende Lichtsammlung erreicht werden. Durch das Mikrolinsenarray kann daher eine Beleuchtungseinrichtung gebildet werden, die eine hohe Lichtsammeleffizienz aufweist und sehr kompakt ist.

Die Detektionseinrichtung des Sensors weist vorzugsweise eine spektrale Empfindlichkeit auf, die spektral so breitbandig ist, dass durch die Detektionseinrichtung das Emissionslicht jeder der Lichtquellen der Beleuchtungseinrichtung detektierbar ist. Insbesondere ist die Detektionseinrichtung zur Detektion von Licht des visuell sichtbaren Spektralbereichs und/ oder zur Detektion von Licht des daran angrenzenden Nahinfrarot-Spektralbereichs ausgebildet. Die von der Detektionseinrichtung aufgenommenen Messwerte werden anschließend durch eine Auswerteeinrichtung ausgewertet, die Bestandteil des Sensors sein kann oder auch durch eine externe Auswerteeinrichtung gebildet wird. Vorzugsweise erfolgt bereits durch den Sensor, insbesondere durch eine interne Auswerteeinrichtung des Sensors, zumindest eine Vorverarbeitung der Messwerte. Die weitere Auswertung kann ebenfalls durch die interne Auswerteeinrichtung oder alternativ durch eine zentrale Auswerteeinrichtung der Vorrichtung erfolgen, in die der Sensor eingebaut ist.

Vor der Detektionseinrichtung ist vorzugsweise eine Detektionsoptik angeordnet, durch die von dem Wertdokument ausgehendes Licht gesammelt und auf einen lichtempfindlichen Bereich der Detektionseinrichtung gerichtet wird. Die Detektionsoptik kann z.B. durch refraktive oder diffraktive optische Elemente oder durch Spiegel realisiert sein. Die Detektionsoptik und die Detektionseinrichtung sind derart ausgebildet und angeordnet, dass, beim Betreiben des Sensors, von dem Licht, das von dem beleuchteten Bereich des Wertdokuments ausgeht, nur Licht aus einem Detektionsbereich des Wertdokuments detektiert wird, der vollständig innerhalb des beleuchteten Bereichs angeordnet ist. Dadurch dass der Detektionsbereich vollständig innerhalb des beleuchteten Bereichs angeordnet ist, wird erreicht, dass die detektierte Lichtintensität unempfindlich ist gegenüber Flatterbewegungen des Wertdokuments, die beim Transportieren des Wertdokuments auftreten können. Der Sensor wird dadurch außerdem auch tolerant gegenüber eventuellen Positionsschwankungen der Beleuchtungseinrichtung, der Abbildungsoptik oder der Detektionsoptik, die sich bei der Herstellung oder beim Zusammenbauen des Sensors ergeben können. Vorzugsweise ist der Detektionsbereich vollständig innerhalb eines homogen beleuchteten Abschnitts des beleuchteten Bereichs angeordnet. In dem homogen beleuchteten Abschnitt ist die Intensität der Beleuchtung vorzugsweise für alle Lichtpulse der Beleuchtungssequenz homogen verteilt.

Dabei ist für den Sensor eine Steuerungseinrichtung vorgesehen, die dazu eingerichtet ist, die Lichtquellen der Beleuchtungseinrichtung nacheinander ein- und wieder auszuschalten, um das Wertdokument nacheinander mit verschiedenen Emissionsspektren zu beleuchten. Das Wertdokument kann nacheinander mit derart verschiedenen Emissionsspektren der Lichtquellen beleuchtet werden, dass eine spektrale Intensitätsverteilung des von dem Wertdokument ausgehenden Lichts erfasst werden kann. Die Steuerungseinrichtung kann als Bestandteil des Sensors ausgebildet sein, sie kann aber auch als externe Steuerungseinrichtung, z.B. als Bestandteil einer Vorrichtung zur Wertdokumentbearbeitung, ausgebildet sein, in die der Sensor eingebaut wird. Die Steuereinrichtung ist dazu eingerichtet, die Beleuchtungseinrichtung des Sensors, insbesondere die Lichtquellen, und die Detektionseinrichtung des Sensors anzusteuern. Beim Betreiben des Sensors schaltet die Steuerungseinrichtung die Lichtquellen nacheinander ein und wieder aus, beispielsweise so, dass zu jedem Zeitpunkt genau eine der Lichtquellen eingeschaltet ist. Zu einem oder mehreren der Zeitpunkte können aber auch gleichzeitig mehrere der Lichtquellen eingeschaltet sein, z.B. mehrere Lichtquellen mit gleichem Emissionsspektrum. Außerdem veranlasst die Steuereinrichtung, dass die Detektionseinrichtung während der eingeschalteten Phase der Lichtquellen jeweils einen Messwert erfasst, der der von dem Wertdokument ausgehenden Lichtintensität entspricht. Da die Detektionseinrichtung synchron zur Beleuchtung durch die Lichtquellen jeweils einen Messwert aufnimmt, wird so für diejenigen Wellenlängen, die durch das Emissionsspektrum der jeweiligen Lichtquelle vorgeben sind, die von dem Wertdokument ausgehende Lichtintensität detektiert.

Bei einer Konfiguration des Sensors werden die Beleuchtungssequenzen festgelegt, die zur Prüfung des Wertdokuments verwendet werden, insbesondere welche Lichtquellen zur Beleuchtung des Wertdokuments ein- und ausgeschaltet werden. Die Steuereinrichtung wird dabei so konfiguriert, dass die Lichtquellen der Beleuchtungseinrichtung, beim Betreiben des Sensors, nacheinander ein- und ausgeschaltet werden, so dass das Wertdokument nacheinander mit verschiedenen Emissionsspektren beleuchtet werden kann. Die für den Sensor vorgesehene Steuerungseinrichtung kann bereits bei der Herstellung des Sensors konfiguriert werden. Es kann jedoch vorgesehen sein, dass die Konfiguration der Steuereinrichtung erst nach der Fertigstellung des Sensors durchgeführt wird. Ferner kann vorgesehen sein, dass die Konfiguration der Steuereinrichtung auch nach Inbetriebnahme des Sensors veränderbar ist. Ein derartiges Umkonfigurieren nach der Inbetriebnahme kann z.B. durch den Hersteller des Sensors oder durch eine Bedienperson der Vorrichtung, in der der Sensor eingebaut ist, durchgeführt werden. Beim Umkonfigurieren kann es auch notwendig sein, die Ansteuerung der Detektionseinrichtung an die Ansteuerung der Beleuchtung anzupassen, z.B. wenn die Anzahl der zur Messung ein- und ausgeschalteten Lichtquellen verändert wird. Beim Umkonfigurieren ist auch die Auswerteeinrichtung, die zur Auswertung der aufgenommenen Messwerte verwendet wird, an die veränderte Konfiguration der Steuereinrichtung anzupassen, z.B. wenn andere Lichtquellen zur Messung verwendet werden.

Vorzugsweise weist der Sensor außerdem ein Gehäuse auf, in dem die Beleuchtungseinrichtung, die Abbildungsoptik und die Detektionseinrichtung, optional auch die Steuereinrichtung und Detektionsoptik, angeordnet sind.

Nachfolgend wird die Erfindung beispielhaft anhand der folgenden Figuren erläutert. Es zeigen:
- Fig. 1a: Ein Beispiel einer Beleuchtungseinrichtung und einer Abbildungsoptik des Sensors zur Beleuchtung eines Bereichs der Messebene,
- Fig.1b: eine Intensitätsverteilung des auf den beleuchteten Bereich der Messebene abgebildeten Lichts,
- Fig. 2a: eine Lichtquellen-Aufnahme mit einer Vielzahl von Lichtquellen und ein zu der Lichtquellen-Aufnahme zugehöriges Mikrolinsenarray,
- Fig. 2b: die Lichtquellen-Aufnahme aus Figur 2a mit darauf angeordneten Lichtquellen und das zugehörige Mikrolinsenarray,
- Fig. 2c: einen Schnitt durch eine aus der Lichtquellen-Aufnahme, den Lichtquellen und dem zugehörigen Mikrolinsenarray der Figur 2b gebildete Beleuchtungseinrichtung,
- Fig. 3a: einen Sensor, der ein an dem Sensor vorbeitransportiertes Wertdokument prüft,
- Fig. 3b: einen Ausschnitt eines Wertdokuments, auf dem der beleuchtete Bereich, der homogen beleuchtete Bereich und der Detektionsbereich dargestellt sind.

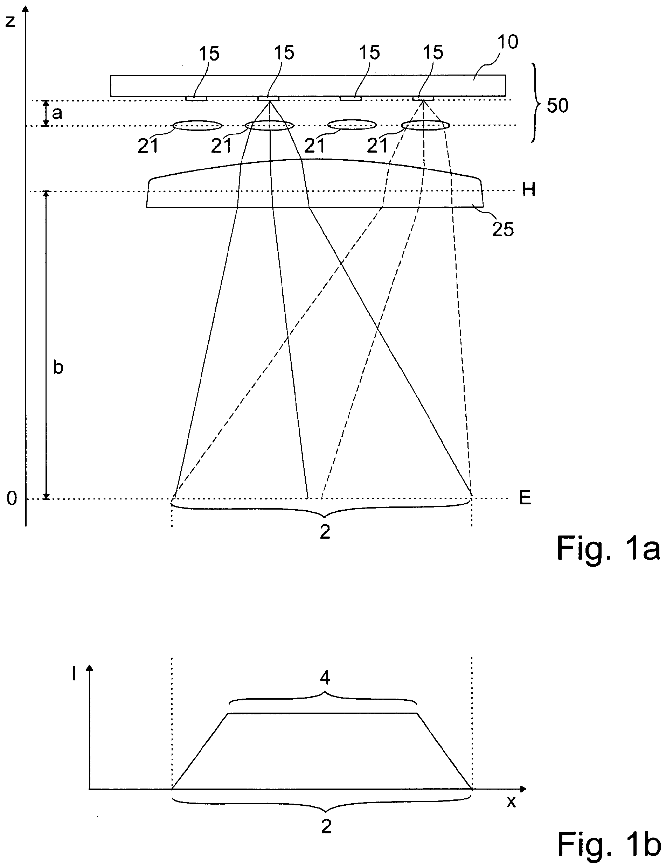

In Figur 1a ist ein Beispiel für eine Beleuchtungseinrichtung 50 und eine Abbildungslinse 25 eines erfindungsgemäßen Sensors dargestellt. Um das von der Beleuchtungseinrichtung 50 emittierte Licht in die Messebene E abzubilden, können als Abbildungsoptik, alternativ zu der Abbildungslinse 25, aber auch andere optische Komponenten verwendet werden, z.B. Linsensysteme, diffraktive optische Komponenten, z.B. eine Fresnellinse, oder abbildende Spiegel. Die Beleuchtungseinrichtung 50 umfasst eine Vielzahl von Lichtquellen 15, die in diesem Beispiel auf einer gemeinsamen Lichtquellenaufnahme 10 angeordnet sind, sowie ein Mikrolinsenarray mit einer Vielzahl von Mikrolinsen 21. Der Abstand a zwischen den Mikrolinsen 21 und den Lichtquellen 15 ist geringer als die Brennweite der Mikrolinsen 21 gewählt, damit die Mikrolinsen 21 einen möglichst großen Anteil des von den Lichtquellen 15 ausgehenden Emissionslichts sammeln. Das von den Mikrolinsen 21 gesammelte Licht wird durch eine Abbildungslinse 25 auf die Messebene E abgebildet, so dass in der Messebene E ein Bereich 2 beleuchtet wird. Aus Gründen der Übersichtlichkeit ist in Figur 1a nur der Verlauf einiger Lichtstrahlen für zwei der Lichtquellen 15 eingezeichnet. Zur Prüfung eines Wertdokuments wird ein Wertdokument in die Messebene E des Sensors gebracht. Um nacheinander mehrere Bereiche des Wertdokuments mit dem Sensor zu erfassen, kann das Wertdokument an dem Sensor vorbeitransportiert werden. Das Wertdokument kann zur Prüfung aber auch statisch in der Messebene E positioniert werden.

Die Abbildungslinse 25 ist so angeordnet und ausgebildet, dass das Emissionslicht der verschiedenen Lichtquellen 15 weitgehend auf denselben Bereich 2 der Messebene E abgebildet wird. Der Abstand b zwischen der optischen Hauptebene H der Abbildungslinse 25 und der Messebene E wird bevorzugt so gewählt, dass der Brennpunkt der Abbildungslinse 25 genau oder zumindest näherungsweise in der Messebene E liegt. Damit wird erreicht, dass das Emissionslicht aller Lichtquellen 15 weitgehend auf denselben beleuchteten Bereich 2 der Messebene E abgebildet wird. Das Mikrolinsenarray 20 und die Abbildungslinse 25 sind bevorzugt derart angeordnet und ausgebildet, dass die Lichtquellen 15 unscharf auf den beleuchteten Bereich 2 der Messebene E abgebildet werden. Dadurch können auch solche Lichtquellen, deren Oberfläche sehr inhomogen leuchtet, den Abschnitt 4 homogen ausleuchten.

Die Abbildungslinse 25 und die Mikrolinsen 21 sind als asphärische Linsen ausgebildet und dabei bevorzugt so aufeinander abgestimmt, dass durch jede der Lichtquellen 15 weitgehend derselbe Abschnitt 4 in der Messebene E homogen beleuchtet werden kann. Damit lässt sich in der Messebene E eine Beleuchtung erreichen, deren Beleuchtungsintensität I als Funktion des Orts x in der Messebene E in Figur 1b skizziert ist. Vom Rand des beleuchteten Bereichs 2 bis zur Mitte nimmt die Beleuchtungsintensität I zu und der mittlere Abschnitt 4 des beleuchteten Bereichs 2 wird homogen beleuchtet. Die Beleuchtungsintensität I ist in diesem homogen beleuchteten Abschnitt 4 etwa konstant.

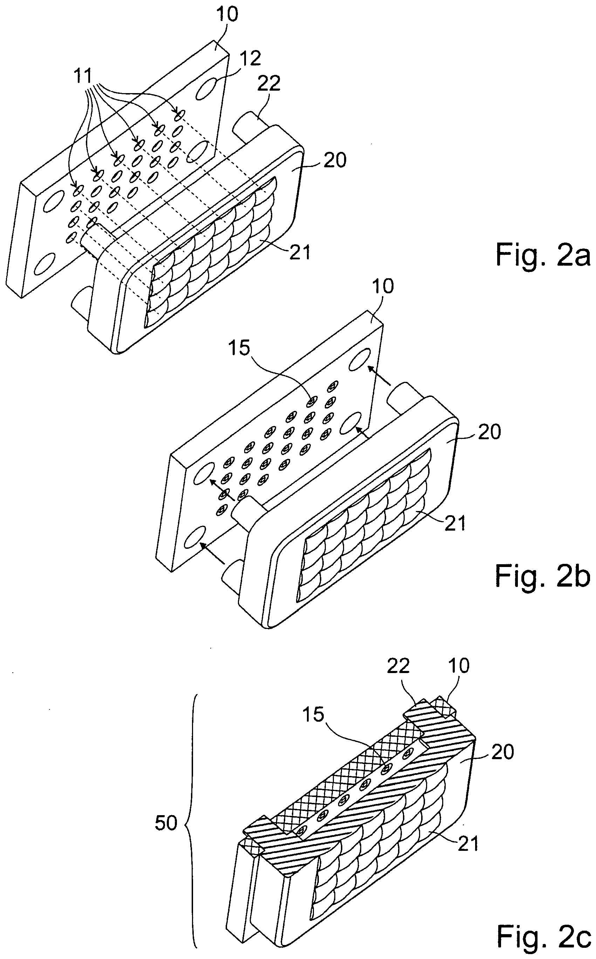

In den Figur 2a-2c ist ein konkretes Ausführungsbeispiel einer Beleuchtungseinrichtung 50 dargestellt. Die Beleuchtungseinrichtung 50 umfasst eine Lichtquellen-Aufnahme 10, auf der eine Vielzahl von Lichtquellen-Positionen 11 vorgesehen sind, von denen jede zur Aufnahme einer Lichtquelle 15 ausgebildet ist. Die Lichtquellen-Aufnahme 10 ist z.B. als Leiterplatte ausgebildet und weist eine zum Betreiben der Lichtquellen 15 benötigte elektrische Verdrahtungsstruktur auf (nicht gezeigt), die eine selektive Ansteuerung jeder einzelnen Lichtquelle erlaubt. Die Lichtquellen-Positionen 11 sind in diesem Beispiel durch Vertiefungen in der Lichtquellen-Aufnahme gebildet, in denen jeweils eine Lichtquelle 15 befestigt werden kann. Außerdem zeigt Figur 2a ein zu der Lichtquellen-Aufnahme 10 gehöriges Mikrolinsenarray 20, das eine Vielzahl von Mikrolinsen 21 aufweist. Die Lichtquellen-Aufnahme 10 und das Mikrolinsenarray 20 sind so aufeinander abgestimmt, dass jeder der Lichtquellen-Positionen 11 genau eine der Mikrolinsen 21 zugeordnet ist. Zu diesem Zweck sind die Mikrolinsen 21 innerhalb des Mikrolinsenarrays 20 in demselben Raster angeordnet wie die Lichtquellen-Positionen auf der Lichtquellen-Aufnahme 10 angeordnet sind. Das Mikrolinsenarray 20 ist als einstückiger Körper ausgebildet und wird beispielsweise durch einen Glaskörper oder durch einen transparenten Kunststoffkörper gebildet. Der Durchmesser der einzelnen Mikrolinsen liegt z.B. im µm-Bereich oder im mm-Bereich.

Zur Bildung einer Beleuchtungseinrichtung 50 werden einige oder alle Lichtquellen-Positionen 11 mit jeweils einer Lichtquelle 15 versehen, vgl. Figur 2b. Als Lichtquellen 15 werden z.B. LEDs und/oder OLEDs und/oder VCSELs eingesetzt. Die Lichtquellen 15 weisen eine Vielzahl verschiedener Emissionsspektren auf. Beispielsweise weist jede der Lichtquellen 15 ein anderes Emissionsspektrum auf als die übrigen Lichtquellen 15. Alternativ dazu können aber auch mehrere gleiche Lichtquellen 15 verwendet werden, z.B. um auch in einem Spektralbereich mit lichtschwachen Lichtquellen eine ausreichende Beleuchtungsintensität zu erhalten.

Zur Befestigung des Mikrolinsenarrays 20 ist der Körper des Mikrolinsenarrays 20 mit Befestigungsstiften 22 ausgestattet, die in dazu passenden Löchern 12 in der Lichtquellen-Aufnahme 10 eingesteckt werden. Nach dem Einstecken der Befestigungsstifte 22 werden das Mikrolinsenarray 20 und die Lichtquellen-Aufnahme 10 aneinander fixiert, z.B. durch eine Formschlussverbindung oder durch Klebung. Die Lichtquellen-Aufnahme 11 mit den darauf angeordneten Lichtquellen 15 und das auf der Lichtquellen-Aufnahme 11 befestigte Mikrolinsenarray 20 bilden eine Beleuchtungseinrichtung 50, vgl. Figur 2c. Das von den einzelnen Lichtquellen 15 emittierte Licht wird durch die über der jeweiligen Lichtquelle 15 angeordnete Mikrolinse 21 gesammelt. Da die Befestigungsstifte 22 als integrale Bestandteile des Körpers des Mikrolinsenarrays 20 ausgebildet sind, ist deren Position relativ zu den Mikrolinsen 21 sehr genau definiert. Auf diese Weise wird durch die Befestigung des Mikrolinsenarrays 20 mittels der Befestigungsstifte 22 automatisch die optimale Position des Mikrolinsenarray 20 relativ zu den Lichtquellen 15 erreicht. Bei der Herstellung des Sensors 100 ist daher keine Justage der Beleuchtungseinrichtung 50 erforderlich.

Der Sensor zur Prüfung von Wertdokumenten wird im Folgenden am Beispiel eines Remissionssensors erläutert. Der erfindungsgemäße Sensor kann jedoch auch als Transmissionssensor ausgebildet sein. Dazu wird die Detektionseinrichtung gegenüber liegend zur Beleuchtungseinrichtung angeordnet werden, so dass das durch das Wertdokument transmittierte Beleuchtungslicht detektiert wird.

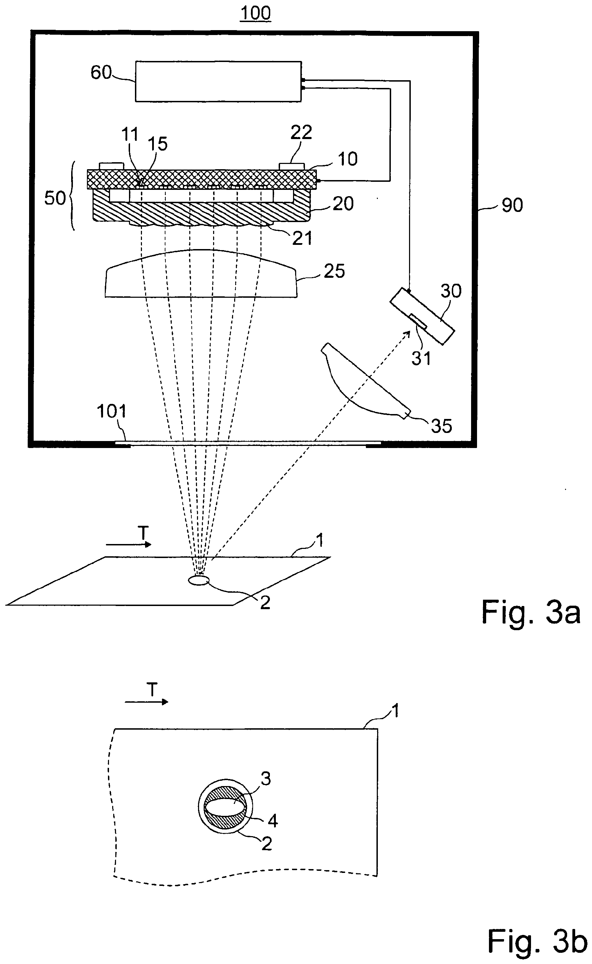

Die Beleuchtungseinrichtung 50 wird in einen Sensor 100 eingebaut, der zur Prüfung von Wertdokumenten ausgebildet ist, vgl. Figur 3a. Das von der Beleuchtungseinrichtung 50 emittierte Licht wird durch eine Abbildungslinse 25 auf das Wertdokument 1 abgebildet. Von dem Wertdokument 1 werden, in Abhängigkeit der optischen Eigenschaften des Wertdokuments 1, Anteile des Beleuchtungslichts remittiert. Das von dem Wertdokument 1 remittierte Licht wird mit Hilfe einer Detektionseinrichtung 30 detektiert, die einen lichtempfindlichen Bereich 31 aufweist. Die Detektionseinrichtung 30 kann z.B. durch eine Photodiode oder einen Phototransistor gebildet sein. Optional kann vor der Detektionseinrichtung 30 eine Detektionsoptik 35 angeordnet sein, durch die das von dem Wertdokument 1 remittierte Licht gesammelt und auf den lichtempfindlichen Bereich 31 gerichtet wird. Im gezeigten Beispiel wird das Beleuchtungslicht senkrecht auf das Wertdokument 1 abgebildet und die Detektionseinrichtung 30 erfasst das unter schrägem Winkel remittierte Licht. Alternativ kann auch die Beleuchtung unter schrägem Winkel erfolgen und die Detektionseinrichtung das in senkrechter Richtung oder in schräger Richtung remittierte Licht erfassen. Zur Detektion des Remissionslichts können auch mehrere gleiche Detektionseinrichtungen vorgesehen sein, z.B. um das Remissionslicht über einen größeren Winkelbereich zu erfassen, oder mehrere verschiedene Detektionseinrichtungen, z.B. um den erfassbaren Spektralbereich zu erweitern.

Der Sensor 100 weist ein Gehäuse 90 auf, an dessen Unterseite ein transparentes Fenster 101 angeordnet ist. Das von der Beleuchtungseinrichtung 50 emittierte Licht wird durch das Fenster 101 auf ein zu prüfendes Wertdokument 1 abgebildet, welches an dem Sensor 100 entlang einer Transportrichtung T vorbeitransportiert wird. Die Beleuchtungseinrichtung 50, insbesondere die Lichtquellen 15, und die Detektionseinrichtung 30 werden von einer Steuereinrichtung 60 angesteuert, die in diesem Beispiel innerhalb des Gehäuses 90 angeordnet ist. Die Steuerungseinrichtung 60 schaltet die Lichtquellen 15 nacheinander ein und wieder aus, beispielsweise so, dass zu jedem Zeitpunkt jeweils genau eine Lichtquelle 15 eingeschaltet ist. Während der eingeschalteten Phase der Lichtquellen erfasst die Detektionseinrichtung 30 jeweils einen Messwert, der der von dem Wertdokument 1 remittierten Lichtintensität entspricht. Das Wertdokument 1 wird nacheinander mit den verschiedenen Emissionsspektren der verschiedenen Lichtquellen 15 beleuchtet. Da die Detektionseinrichtung 30 synchron zur Beleuchtung durch die Lichtquellen 15 jeweils einen Messwert aufnimmt, wird so in jedem Spektralbereich, den die Lichtquellen 15 vorgeben, die von dem Wertdokument 1 remittierte Lichtintensität gemessen.

Die Steuereinrichtung 60 steuert die Lichtquellen 15 so an, so dass sich die Beleuchtungssequenz, mit der die Lichtquellen 15 ein- und ausgeschaltet werden, periodisch wiederholt wird. Beispielsweise kann die Steuereinrichtung 60 so programmiert sein, dass während jeder Beleuchtungssequenz jede Lichtquelle 15 der Beleuchtungseinrichtung genau einmal ein- und ausgeschaltet wird. Alternativ kann eine Lichtquelle 15 auch mehrmals pro Beleuchtungssequenz angesteuert werden, z.B. um die geringe Intensität einer intensitätsschwachen Lichtquelle 15 durch mehrfache Messung zu kompensieren. Eine Beleuchtungssequenz kann entweder die Ansteuerung aller in der Beleuchtungseinrichtung 50 vorhandenen Lichtquellen 15 beinhalten oder nur einer Teilmenge der vorhandenen Lichtquellen 15. Nach einer Beleuchtungssequenz, d.h. nachdem unter Beleuchtung mit jedem Emissionsspektrum, das für die Messung vorgesehen ist, ein Messwert aufgenommen wurde, startet die nächste Beleuchtungssequenz, in der erneut unter Beleuchtung mit jedem Emissionsspektrum, das für die Messung vorgesehen ist, ein Messwert aufgenommen wird, usw.

Figur 3b zeigt einen Teilbereich des Wertdokuments 1, auf dem der durch die Beleuchtungseinrichtung 50 beleuchtete Bereich 2 gezeigt ist. Durch die Lichtpulse der verschiedenen Lichtquellen 15 wird ein Abschnitt 4 des Beleuchtungsbereichs 2 jeweils mit homogener Lichtintensität beleuchtet. Für alle Lichtquellen der Beleuchtungseinrichtung 50 wird weitgehend derselbe Abschnitt 4 des beleuchteten Bereichs 2 homogen beleuchtet. Ferner ist der Detektionsbereich 3 gezeigt, der vollständig innerhalb des homogen beleuchteten Abschnitts 4 des Beleuchtungsbereichs 2 angeordnet ist.

Die Dauer der Beleuchtungssequenz ist derart auf die Transportgeschwindigkeit des Wertdokuments 1 abgestimmt, dass die verschiedenen Messwerte einer Beleuchtungssequenz zumindest näherungsweise von demselben Detektionsbereich 3 auf dem vorbeitransportierten Wertdokument 1 stammen. Die Strecke, die das Wertdokument 1 vom Beginn bis zum Ende derselben Beleuchtungssequenz zurücklegt, ist also viel kleiner als die Länge des Detektionsbereichs 3. Die während einer Beleuchtungssequenz erhaltenen Messwerte liefern die spektrale Abhängigkeit der Remission des Wertdokuments 1 im jeweiligen Detektionsbereich 3.

## Patentansprüche

1. Sensor (100) zur Prüfung eines Wertdokuments (1), das, zur Prüfung des Wertdokuments (1), in einer Messebene (E) vorhanden ist, umfassend:
- eine Beleuchtungseinrichtung (50) zum Beleuchten eines Bereichs (2) der Messebene (E), umfassend eine Vielzahl verschiedener Lichtquellen (15), die nebeneinander angeordnet sind und deren Emissionsspektren voneinander verschieden sind, und
- eine Abbildungsoptik (25), durch die das von der Beleuchtungseinrichtung (50) ausgesendete Licht der verschiedenen Lichtquellen (15) auf den beleuchteten Bereich (2) der Messebene (E) abgebildet werden kann, wobei die Messebene (E) derart nah an einem Brennpunkt der Abbildungsoptik (25) liegt, dass das von der Beleuchtungseinrichtung (50) ausgesendete Licht der verschiedenen Lichtquellen (15) weitgehend auf denselben beleuchteten Bereich (2) der Messebene (E) abgebildet wird, und
- eine Detektionseinrichtung (30) zum Detektieren von Detektionslicht, das, beim Prüfen des Wertdokuments (1), wenn der beleuchtete Bereich (2) ein beleuchteter Bereich (2) des Wertdokuments (1) ist, von dem beleuchteten Bereich (2) ausgeht
**dadurch gekennzeichnet, dass**
für den Sensor (100) eine Steuerungseinrichtung vorgesehen ist, die dazu eingerichtet ist, beim Betreiben des Sensors (100) die Vielzahl der Lichtquellen nacheinander ein- und wieder auszuschalten, um den Bereich (2) des Wertdokuments (1) mit einer Beleuchtungssequenz aus Lichtpulsen mit verschiedenen Emissionsspektren zu beleuchten, und dass die Beleuchtungseinrichtung zusätzlich ein Mikrolinsenarray (20) mit einer Vielzahl von Mikrolinsen (21) umfasst, wobei das Mikrolinsenarray (20) und die Lichtquellen (15) derart zueinander angeordnet sind, dass jeder der Lichtquellen (15) genau eine der Mikrolinsen (21) zugeordnet ist, so dass das von der Lichtquelle (15) ausgesendete Emissionslicht durch die der Lichtquelle (15) zugeordnete Mikrolinse (21) gesammelt werden kann.

2. Sensor (100) nach Anspruch 1, **dadurch gekennzeichnet, dass** die Mikrolinsen (21) des Mikrolinsenarrays (20) und die Abbildungsoptik (25) derart angeordnet und ausgebildet sind, dass die Lichtquellen (15), beim Beleuchten des Bereichs (2), unscharf auf den beleuchteten Bereich (2) der Messebene (E) abgebildet werden.

3. Sensor (100) nach einem der vorhergehenden Ansprüche, **dadurch gekennzeichnet, dass** jede der Lichtquellen (15) durch die ihr zugeordnete Mikrolinse (21) und die Abbildungsoptik (25) so abgebildet wird, dass der durch die Lichtquelle (15) beleuchtete Bereich (2) der Messebene (E) im Vergleich zur Lichtquelle (15) vergrößert ist.

4. Sensor (100) nach einem der vorhergehenden Ansprüche, **dadurch gekennzeichnet, dass** die Lichtquellen (15) und das Mikrolinsenarray (20) so zueinander angeordnet sind, dass jede Lichtquelle (15) der Beleuchtungseinrichtung (50) von der ihr zugeordneten Mikrolinse (21) weniger als die Brennweite der Mikrolinse (21) entfernt ist.

5. Sensor (100) nach einem der vorhergehenden Ansprüche, **dadurch gekennzeichnet, dass** die Mikrolinsen (21) des Mikrolinsenarrays (20) als asphärische Mikrolinsen (21) ausgebildet sind und/oder dass die Abbildungsoptik (25) zumindest eine asphärische Abbildungslinse (25) aufweist.

6. Sensor (100) nach Anspruch 5, **dadurch gekennzeichnet, dass** die asphärische Form der Mikrolinsen (21) und die asphärische Form der Abbildungslinse (25) derart aufeinander abgestimmt sind, dass ein Abschnitt (4) innerhalb des beleuchteten Bereichs (2) der Messebene (E) durch das Emissionslicht jeder der verschiedenen Lichtquellen (15) homogen beleuchtet wird.

7. Sensor (100) nach einem der Ansprüche 5 bis 6, **dadurch gekennzeichnet, dass** die Form der asphärischen Mikrolinsen (21) und die Form der asphärischen Abbildungslinse (25) qualitativ in gleicher Weise von einer sphärischen Linsenform abweichen.

8. Sensor (100) nach einem der Ansprüche 5 bis 7, **dadurch gekennzeichnet, dass** die Form der asphärischen Mikrolinsen (21) jeweils derart von einer sphärischen Linsenform abweicht, dass die Oberfläche der jeweiligen Mikrolinse (21) am Rand der Mikrolinse (21) weniger gekrümmt ist als in der Mitte der Mikrolinse (21).

9. Sensor (100) nach einem der Ansprüche 5 bis 8, **dadurch gekennzeichnet, dass** die Form der asphärische Abbildungslinse (25) derart von einer sphärischen Linsenform abweicht, dass die Oberfläche der Abbildungslinse am Rand der Abbildungslinse (25) weniger gekrümmt ist als in der Mitte der Abbildungslinse (25).

10. Sensor (100) nach einem der vorhergehenden Ansprüche, **dadurch gekennzeichnet, dass** zwischen dem Mikrolinsenarray (20) und der Abbildungsoptik (25) ein Streukörper zum Homogenisieren des von der Beleuchtungseinrichtung (50) ausgesendeten Lichts angeordnet ist, insbesondere eine Streufolie.

11. Sensor (100) nach einem der vorhergehenden Ansprüche, **dadurch gekennzeichnet, dass** das Mikrolinsenarray (20) als einstückiger Körper ausgebildet ist.

12. Sensor (100) nach einem der vorhergehenden Ansprüche, **dadurch gekennzeichnet, dass**, beim Betreiben des Sensors (100), nur Licht aus einem Detektionsbereich (3) des Wertdokuments (1) detektiert wird, der vollständig innerhalb des beleuchteten Bereichs (2) angeordnet ist, wobei der Detektionsbereich (3) vorzugsweise vollständig innerhalb eines homogen beleuchteten Abschnitts (4) des jeweiligen beleuchteten Bereichs (2) angeordnet ist.

13. Vorrichtung zur Prüfung von Wertdokumenten mit einem oder mehreren Sensor (100) gemäß einem der vorhergehenden Ansprüche.

## Claims

1. A sensor (100) for checking a value document (1) which, for checking the value document (1), is present in a measuring plane (E), comprising:
- an illumination device (50) for illuminating a region (2) of the measuring plane (E), comprising a multiplicity of different light sources (15) which are arranged next to each other and the emission spectra of which are different from each other, and
- an imaging optic (25), by which the light of the different light sources (15) emitted by the illumination device (50) can be imaged onto the illuminated region (2) of the measuring plane (E), wherein the measuring plane (E) lies so close to a focus of the imaging optic (25) that the light of the different light sources (15) emitted by the illumination device (50) is imaged largely onto the same illuminated region (2) of the measuring plane (E), and
- a detection device (30) for detecting detection light which, upon checking the value document (1), when the illuminated region (2) is an illuminated region (2) of the value document (1), emanates from the illuminated region (2),
**characterized in that**
for the sensor (100) a control device is provided that is adapted, during operation of the sensor (100), to consecutively switch on and off again the multiplicity of light sources, in order to illuminate the region (2) of the value document (1) with an illumination sequence of light pulses with different emission spectra, and
that the illumination device additionally comprises a microlens array (20) with a multiplicity of microlenses (21), wherein the microlens array (20) and the light sources (15) are mutually arranged such that to each of the light sources (15) there is allocated exactly one of the microlenses (21), so that the emission light emitted by the light source (15) can be collected by the microlens (21) allocated to the light source (15).

2. The sensor (100) according to claim 1, **characterized in that** the microlenses (21) of the microlens array (20) and the imaging optic (25) are arranged and configured in such a fashion that the light sources (15), upon illuminating the region (2), are imaged indistinctly onto the illuminated region (2) of the measuring plane (E).

3. The sensor (100) according to any of the preceding claims, **characterized in that** each of the light sources (15) is imaged by the microlens (21) associated therewith and the imaging optic (25) such that the region (2) of the measuring plane (E) illuminated by the light source (15) is enlarged in comparison to the light source (15).

4. The sensor (100) according to any of the preceding claims, **characterized in that** the light sources (15) and the microlens array (20) are arranged relative to each other such that each light source (15) of the illumination device (50) is less remote from the microlens (21) associated therewith than the focal length of the microlens (21).

5. The sensor (100) according to any of the preceding claims, **characterized in that** the microlenses (21) of the microlens array (20) are configured as aspherical microlenses (21) and/or that the imaging optic (25) has at least one aspherical imaging lens (25).

6. The sensor (100) according to claim 5, **characterized in that** the aspherical shape of the microlenses (21) and the aspherical shape of the imaging lens (25) are mutually coordinated such that a portion (4) within the illuminated region (2) of the measuring plane (E) is homogeneously illuminated by the emission light of each of the different light sources (15).

7. The sensor (100) according to any of the claims 5 to 6, **characterized in that** the shape of the aspherical microlenses (21) and the shape of the aspherical imaging lens (25) deviate qualitatively in the same fashion from a spherical lens shape.

8. The sensor (100) according to any of the claims 5 to 7, **characterized in that** the shape of the aspherical microlenses (21) respectively deviates from a spherical lens shape in such a fashion that the surface of the respective microlens (21) at the edge of the microlens (21) is less strongly curved than in the middle of the microlens (21).

9. The sensor (100) according to any of the claims 5 to 8, **characterized in that** the shape of the aspherical imaging lens (25) deviates from a spherical lens shape in such a fashion that the surface of the imaging lens at the edge of the imaging lens (25) is less strongly curved than in the middle of the imaging lens (25).

10. The sensor (100) according to any of the preceding claims, **characterized in that** between the microlens array (20) and the imaging optic (25) there is arranged a scatterer for homogenizing the light emitted by the illumination device (50), in particular a scattering foil.

11. The sensor (100) according to any of the preceding claims, **characterized in that** the microlens array (20) is configured as a one-pieced body.

12. The sensor (100) according to any of the preceding claims, **characterized in that** upon operating the sensor (100), there is detected only light from a detection region (3) of the value document (1) which detection region is arranged completely within the illuminated region (2), wherein the detection region (3) is preferably arranged completely within a homogeneously illuminated portion (4) of the respective illuminated region (2).

13. An apparatus for checking value documents having one or several sensors (100) according to any of the preceding claims.

## Revendications

1. Capteur (100) destiné à la vérification d'un document de valeur (1), qui, pour la vérification du document de valeur (1), est installé dans un plan de mesure (E), comprenant :
- un équipement d'éclairage (50) destiné à l'éclairage d'une zone (2) du plan de mesure (E), comprenant une pluralité de différentes sources de lumière (15) qui sont juxtaposées et dont les spectres d'émission sont différents les uns des autres, et
- une optique de reproduction (25) par laquelle la lumière des différentes sources de lumière (15) émise par l'équipement d'éclairage (50) peut être reproduite sur la zone éclairée (2) du plan de mesure (E), le plan de mesure (E) se trouvant si près d'un point focal de l'optique de reproduction (25) que la lumière des différentes sources de lumière (15) émise par l'équipement d'éclairage (50) est en grande partie reproduite sur la même zone éclairée (2) du plan de mesure (E), et
- un équipement de détection (30) destiné à la détection de lumière de détection qui, lors de la vérification du document de valeur (1), quand la zone éclairée (2) est une zone éclairée (2) du document de valeur (1), émane de la zone éclairée (2),
**caractérisé en ce que**
pour le capteur (100), un équipement de commande est prévu, lequel est conçu pour, lors du fonctionnement du capteur (100), activer puis désactiver les unes après les autres la pluralité de sources de lumière afin d'éclairer la zone (2) du document de valeur (1) avec une séquence d'éclairage consistant en impulsions lumineuses ayant différents spectres d'émission, et
**en ce que** l'équipement d'éclairage comprend en outre un réseau de microlentilles (20) doté d'une pluralité de micro lentilles (21),
le réseau de microlentilles (20) et les sources de lumière (15) étant agencés de telle façon l'un par rapport aux autres que, à chacune des sources de lumière (15), exactement une des microlentilles (21) est affectée, de telle sorte que la lumière d'émission émise par la source de lumière (15) peut être recueillie par la microlentille (21) affectée à la source de lumière (15).

2. Capteur (100) selon la revendication 1, **caractérisé en ce que** les microlentilles (21) du réseau de microlentilles (20) et l'optique de reproduction (25) sont agencées et réalisées de telle façon que les sources de lumière (15), lors de l'éclairage de la zone (2), sont reproduites de manière floue sur la zone éclairée (2) du plan de mesure (E).

3. Capteur (100) selon une des revendications précédentes, **caractérisé en ce que** chacune des sources de lumière (15) est reproduite de telle façon par la microlentille (21) lui étant affectée et par l'optique de reproduction (25) que la zone (2) du plan de mesure (E) éclairée par la source de lumière (15) est agrandie en comparaison avec la source de lumière (15).

4. Capteur (100) selon une des revendications précédentes, **caractérisé en ce que** les sources de lumière (15) et le réseau de microlentilles (20) sont agencés de telle façon les unes par rapport à l'autre que c'est de moins de la distance focale de la microlentille (21) que chaque source de lumière (15) de l'équipement d'éclairage (50) est éloignée de la microlentille (21) lui étant affectée.

5. Capteur (100) selon une des revendications précédentes, **caractérisé en ce que** les microlentilles (21) du réseau de microlentilles (20) sont réalisées sous forme de microlentilles (21) asphériques et/ou **en ce que** l'optique de reproduction (25) comporte au moins une lentille de reproduction (25) asphérique.

6. Capteur (100) selon la revendication 5, **caractérisé en ce que** la forme asphérique des microlentilles (21) et la forme asphérique de la lentille de reproduction (25) sont accordées de telle manière entre elles qu'une section (4) à l'intérieur de la zone éclairée (2) du plan de mesure (E) est éclairée de manière homogène par la lumière d'émission de chacune des différentes sources de lumière (15).

7. Capteur (100) selon une des revendications de 5 à 6, **caractérisé en ce que** c'est de la même façon que la forme des microlentilles (21) asphériques et la forme de la lentille de reproduction (25) asphérique divergent qualitativement d'une forme lenticulaire sphérique.

8. Capteur (100) selon une des revendications de 5 à 7, **caractérisé en ce que** la forme des micro lentilles (21) asphériques diverge de telle façon d'une forme lenticulaire sphérique que la surface de la microlentille (21) respective est, au bord de la microlentille (21), moins incurvée qu'au milieu de la microlentille (21).

9. Capteur (100) selon une des revendications de 5 à 8, **caractérisé en ce que** la forme de la microlentille (25) asphérique diverge de telle façon d'une forme lenticulaire sphérique que la surface de la lentille de reproduction est, au bord de la lentille de reproduction (25), moins incurvée qu'au milieu de la lentille de reproduction (25).

10. Capteur (100) selon une des revendications précédentes, **caractérisé en ce que**, entre le réseau de microlentilles (20) et l'optique de reproduction (25), un diffuseur destiné à l'homogénéisation de la lumière d'émission émise par l'équipement d'éclairage (50) est agencé, en particulier une feuille de diffusion.

11. Capteur (100) selon une des revendications précédentes, **caractérisé en ce que** le réseau de microlentilles (20) est réalisé sous forme d'un corps d'un seul tenant.

12. Capteur (100) selon une des revendications précédentes, **caractérisé en ce que**, lors du fonctionnement du capteur (100), uniquement de la lumière provenant d'une zone de détection (3) du document de valeur (1) agencée entièrement à l'intérieur de la zone éclairée (2) est détectée, la zone de détection (3) étant de préférence agencée entièrement à l'intérieur d'une section (4) éclairée de manière homogène de la zone éclairée (2) respective.

13. Dispositif de vérification de documents de valeur comprenant un ou plusieurs capteurs (100) conformément à une des revendications précédentes.
